# EUROPÄISCHE PATENTSCHRIFT

(11) **EP 2 850 553 B1**
(45) Veröffentlichungstag und Bekanntmachung des Hinweises auf die Patenterteilung: **18.09.2019**
(21) Anmeldenummer: 13720402.0
(22) Anmeldetag: 03.05.2013
(51) Int. Cl.: G06F 21/34, G06F 9/4401

(54) **ELEKTRONISCHES ZUGANGSSCHUTZSYSTEM, VERFAHREN ZUM BETRIEB EINES COMPUTERSYSTEMS, CHIPKARTE UND FIRMWAREKOMPONENTE**
ELECTRONIC ACCESS-PROTECTION SYSTEM, METHOD FOR OPERATING A COMPUTER SYSTEM, CHIP CARD AND FIRMWARE COMPONENT
SYSTÈME DE PROTECTION D'ACCÈS ÉLECTRONIQUE, PROCÉDÉ D'EXPLOITATION D'UN SYSTÈME INFORMATIQUE, CARTE À PUCE ET COMPOSANT À MICROPROGRAMME

(30) Priorität: 15.05.2012 DE 102012104228
(43) Veröffentlichungstag der Anmeldung: 25.03.2015
(73) Patentinhaber: Fujitsu Technology Solutions Intellectual Property GmbH, 80807 München (DE)
(72) Erfinder: WEGENER, Mario, 86399 Bobingen (DE)
(74) Vertreter: Epping - Hermann - Fischer
(86) Internationale Anmeldenummer: PCT/EP2013/059247
(87) Internationale Veröffentlichungsnummer: WO 2013/178426

(56) Entgegenhaltungen:
- EP-A2- 0 991 033
- US-A1- 2003 236 987
- US-A1- 2005 050 366
- US-A1- 2006 010 317
- US-A1- 2008 052 770
- ANONYMOUS: "Autorun", INTERNET CITATION, 29. Oktober 2008 (2008-10-29), Seiten 1-6, XP002559145, Gefunden im Internet: URL:http://en.wikipedia.org/w/index.php?ti tle=AutoRun&oldid=248476964#Sample_USB-rea dy_autorun.inf_file [gefunden am 2009-12-07]

## Beschreibung

Die vorliegende Erfindung betrifft ein elektronisches Zugangsschutzsystem für ein Computersystem oder dergleichen. Das System umfasst eine zugangsgeschützte Vorrichtung mit einer Firmwarekomponente und einer Datenverarbeitungseinrichtung zum Ausführen von Programmcode der Firmwarekomponente, eine mit der Vorrichtung gekoppelte Leseeinrichtung zum Lesen von Chipkarten und wenigstens eine Chipkarte mit wenigstens einer chipkartenspezifischen Zugriffsprozedur. Die Erfindung betrifft des Weiteren ein Verfahren zum Betrieb eines Computersystems, eine Chipkarte sowie eine Firmwarekomponente.

Auf Chipkarten basierende elektronische Zugangsschutzsysteme für Computersysteme sind aus dem Stand der Technik bekannt. Insbesondere ist es aus dem Stand der Technik bekannt, einen Zugang zu einem Computersystem oder ähnlichem Gerät erst dann zu gewähren, wenn ein von einem Benutzer eingegebenes Passwort, zum Beispiel eine so genannte persönliche Identifizierungsnummer (PIN), durch eine Datenverarbeitungsvorrichtung der Chipkarte erfolgreich verifiziert wurde.

Aus der EP 0 991 033 A2 ist eine Chipkarte mit gespeicherten Informationen bekannt, die bei der Ausführung eines außerhalb der Chipkarte ausgeführten Computerprogramms (Kartenanwendung) verwendet werden. Die gespeicherten Informationen enthalten eine Steuerinformation für den Startmodus der Kartenanwendung. Nach dem Einführen der Chipkarte in einen dafür vorgesehenen Kartenleser wird in einem Endgerät automatisch diejenige Anwendung geladen und gestartet, welche für die Verwendung mit dieser Chipkarte vorgesehen ist. Dadurch wird die Bedienungsfreundlichkeit von Chipkarten erhöht. Hierzu wird in dem Endgerät ein Hintergrundprogramm ausgeführt, dass auf das Einführen der Chipkarte in das Chipkartenlesegerät wartet. Das Ausführen eines Hintergrundprogramms ist nur im laufenden Betrieb, also nach dem Start des Endgeräts möglich.

Aus der US 2006/0010317 A1 ist ein Verfahren zur Verbesserung eines BIOS einer Computervorrichtung während eines BIOS-Vorgangs bekannt.

Soll ein elektronischer Zugangsschutz bereits beim Starten eines Computersystems ausgeführt werden, ergibt sich das Problem, dass eine zum Starten verwendete Firmwarekomponente, wie insbesondere ein BIOS-Programm eines Computersystems, zum Datenaustausch mit dem Chipkartenleser beziehungsweise einer in den Chipkartenleser eingesetzten Chipkarte eingerichtet sein muss. Dies führt zu einer verhältnismäßig hohen Komplexität der Firmwarekomponente.

Die Komplexität der Firmwarekomponente nimmt noch weiter zu, wenn nicht nur eine, sondern unterschiedliche Chipkartentypen mit unterschiedlichen Zugriffsprozeduren zur Implementierung des Zugangsschutzes verwendet werden sollen. In der Praxis hat sich eine Vielzahl von unterschiedlichen Chipkartentypen mit unterschiedlichen, für die jeweilige Chipkarte spezifischen Zugriffsprozeduren etabliert. Eine Anpassung einer Firmwarekomponente an mehrere oder gar alle am Markt befindliche Chipkartentypen und Zugriffsprozeduren ist dabei in der Regel aus Gründen der begrenzten Speicherkapazität der Firmwarekomponente oder dem mit der Erstellung von angepasstem Firmwarecode erforderlichen Zeitaufwand praktisch nicht möglich oder sehr kosten- und fehlerintensiv.

Aufgabe der vorliegenden Erfindung ist es, ein einfaches und zugleich flexibles elektronisches Zugangsschutzsystem für ein Computersystem oder dergleichen und die dafür erforderlichen Komponenten und geeignete Betriebsverfahren zu beschreiben.

Gemäß einem ersten Aspekt der Erfindung wird ein gattungsgemäßes elektronisches Zugangsschutzsystem beschrieben, bei dem in einem vorbestimmten Speicherbereich der wenigstens einen Chipkarte erste Informationen bezüglich der wenigstens einen chipkartenspezifischen Zugriffsprozedur abgelegt sind, wobei die ersten Informationen einen Verweis auf in einem anderen Speicherbereich der wenigstens einen Chipkarte gespeicherte zweite Informationen enthalten, wobei die zweiten Informationen Daten zur Durchführung der wenigstens einen chipkartenspezifischen Zugriffsprozedur enthalten. Die wenigstens eine Firmwarekomponente weist ausführbaren Programmcode zum Einlesen und Auswerten von Daten der wenigstens einen Chipkarte auf und ist dazu eingerichtet, die wenigstens eine chipkartenspezifische Zugriffsprozedur für die wenigstens eine Chipkarte auf Grundlage der in dem ersten Speicherbereich gespeicherten ersten Informationen und der in dem anderen Speicherbereich gespeicherten zweiten Informationen durchzuführen.

Durch das Vorsehen von ersten Informationen bezüglich wenigstens einer chipkartenspezifischen Zugriffsprozedur sowie der Vorsehung einer Firmwarekomponente, die dazu eingerichtet ist, die chipkartenspezifische Zugriffsprozedur auf Grundlage der in der Chipkarte gespeicherten ersten Daten durchzuführen, kann eine Modularisierung und damit Flexibilisierung des Zugangsschutzsystems erreicht werden.

Insbesondere werden solche Informationen, die spezifisch für einen eingesetzten Chipkartentyp sind, auf der Chipkarte selbst gespeichert, während andere Informationen, insbesondere Programmcode zum Einlesen und Auswerten von Daten einer beliebigen Chipkarten, bereits in der Firmware integriert sind. Unter Berücksichtigung der in dem vorbestimmten Speicherbereich enthaltenen ersten Informationen vermag die Firmwarekomponente dann eine chipkartenspezifische Zugriffsprozedur durchzuführen.

Bei den chipkartenspezifischen Zugriffsprozeduren kann es sich beispielsweise um spezielle Funktionen oder Befehle zum Verifizieren von Passworten oder anderen geschützten Daten handeln. Es kann sich dabei aber auch um chipkartenspezifische Funktionen oder Befehle zum Auslesen von auf der Chipkarte gespeicherten Daten handeln. Chipkartenspezifische Zugriffsprozeduren in der Form von Smartcard-Befehlen für eine so genannte Appliction Protocol Data Unit (APDU) sind beispielsweise im Teil 4 der ISO/IEC 7816 Spezifikation definiert.

In einer bevorzugten Ausgestaltung sind die ersten Informationen in einem vorbestimmten standardkonformen Objekt der Chipkarte abgelegt, insbesondere in einem vorbestimmten ersten Informationsobjekt eines vorbestimmten Systemverzeichnisses. Durch das Ablegen von ersten Informationen in einem vorbestimmten standardkonformen Objekt kann eine Kompatibilität mit einer Vielzahl von unterschiedlichen Chipkarten erreicht werden.

Die ersten Informationen enthalten einen Verweis auf in einem anderen Speicherbereich der wenigstens einen Chipkarte gespeicherte zweite Informationen, wobei die zweiten Informationen Daten zur Durchführung der wenigstens einen chipkartenspezifischen Zugriffsprozedur enthalten. Durch einen derartigen, indirekten Ansatz kann eine Flexibilität bezüglich der Speicherung der Daten zur Durchführung der wenigstens einen chipkartenspezifischen Zugriffsprozedur bewirkt werden.

Gemäß weiteren vorteilhaften Ausgestaltungen sind die zweiten Informationen in einem für das elektronische Zugangsschutzsystem spezifischen zweiten Informationsobjekt der Chipkarte abgelegt, insbesondere in einem kryptographischen Objekt eines Anwendungsverzeichnisses. Dabei enthalten die zweiten Informationen beispielsweise Vorlagen und/oder Parameter für Befehle zur Durchführung der wenigstens einen chipkartenspezifischen Zugriffsprozedur. Durch die Ablage von Vorlagen und/oder Parametern für Befehle zur Durchführung wenigstens einer chipkartenspezifischen Zugriffsprozedur in einem für das elektronische Zugangsschutzsystem spezifischen Informationsobjekt kann ein besonders hoher Grad an Flexibilität des elektronischen Zugangsschutzsystems erreicht werden.

Gemäß einem zweiten Aspekt der Erfindung wird ein Verfahren zum Betrieb eines Computersystems oder dergleichen mit einer Firmwarekomponente und mit einer elektronischen Leseeinrichtung zum Lesen von Chipkarten beschrieben. Das Verfahren umfasst die Schritte:
- Erkennen einer in die Leseeinrichtung eingeführten Chipkarte durch die Firmwarekomponente,
- Auslesen und Auswerten von in einem vorbestimmten Speicherbereich der wenigstens einen Chipkarte gespeicherten ersten Informationen bezüglich wenigstens einer chipkartenspezifischen Zugriffsprozedur, wobei die ersten Informationen einen Verweis auf in einem anderen Speicherbereich der wenigstens einen Chipkarte gespeicherte zweite Informationen enthalten, wobei die zweiten Informationen Daten zur Durchführung der wenigstens einen chipkartenspezifischen Zugriffsprozedur enthalten und
- Durchführen der wenigstens einen chipkartenspezifischen Zugriffsprozedur auf Grundlage der ausgewerteten ersten und zweiten Informationen durch die Firmwarekomponente.

Ein derartiges Verfahren erlaubt die Implementierung eines modularen, flexiblen Chipkartensystems basierend auf einer universellen Firmwarekomponente und einer zugehörigen Chipkarte. Das Verfahren kann bereits beim Start eines Computersystems, also vor der Ausführung eines auf dem Computersystem installierten Betriebssystems, durchgeführt werden.

In einer Ausgestaltung umfasst das Verfahren zusätzlich den Schritt des Gestatten eines Zugangs zu einer zuganggeschützten Vorrichtung durch die Firmwarekomponente, wenn die chipkartenspezifische Zugriffsprozedur erfolgreich durchgeführt wurde, und, andernfalls, Verweigern eines Zugangs zu der zuganggeschützte Vorrichtung durch die Firmwarekomponente. Das Verfahren eignet sich insbesondere zur Herstellung eines Zugangsschutzes für ein Computersystem.

Gemäß einer vorteilhaften Ausgestaltung ist eine Datenverarbeitungsvorrichtung der Chipkarte dazu eingerichtet, die ersten Informationen auszulesen und auszuwerten und basierend auf den ersten Informationen zweite Informationen auszulesen und an die Firmwarekomponente des Computersystems zu übermitteln. In dieser Ausführung können Daten, die lediglich die Struktur der auf der Chipkarte gespeicherten Informationen betreffen, von der Firmwarekomponente verborgen werden.

Gemäß einer alternativen Ausgestaltung ist die Firmwarekomponente dazu eingerichtet, die ersten Informationen von der Chipkarte anzufordern und auszuwerten und basierend auf den ausgewerteten ersten Informationen zweite Informationen von der Chipkarte anzufordern und auszuwerten. Gemäß dieser Ausgestaltung kann auf die Vorsehung weiterer Datenverarbeitungsfunktionen auf Seiten der Chipkarte verzichtet werden.

Gemäß einem dritten und vierten Aspekt der Erfindung werden eine Chipkarte beziehungsweise eine Firmwarekomponente beschrieben, die zur Implementierung des Zugangsschutzsystems sowie zur Durchführung des Zugangsschutzverfahrens geeignet sind.

Weitere vorteilhafte Ausgestaltungen sind in den abhängigen Patentansprüchen sowie der nachfolgenden ausführlichen Beschreibung von Ausführungsbeispielen angegeben.

Die Erfindung wird nachfolgend anhand von unterschiedlichen Ausführungsbeispielen unter Bezugnahme auf die angehängten Figuren beschrieben.

In den Figuren zeigen:
- Figur 1: ein Blockdiagramm eines elektronischen Zugangsschutzsystems und
- Figur 2: ein Kollaborationsdiagramm eines Zugangsschutzverfahrens.

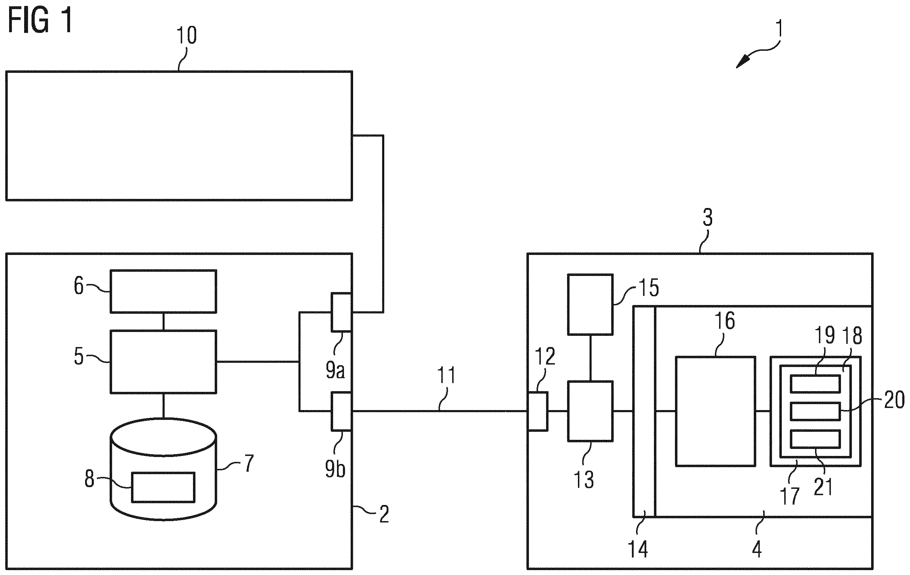

Figur 1 zeigt schematisch ein elektronisches Zugangsschutzsystem 1 gemäß einer möglichen Ausgestaltung der Erfindung. Das elektronische Zugangsschutzsystem 1 umfasst ein Computersystem 2 sowie eine an das Computersystem 2 angeschlossene Leseeinrichtung 3. In eine entsprechende Öffnung der Leseeinrichtung 3 ist im dargestellten Ausführungsbeispiel eine Chipkarte 4 eingesetzt.

Bei dem Computersystem 2 handelt es sich beispielsweise um einen gewöhnlichen Arbeitsplatz-PC. Selbstverständlich kann es sich bei dem Computersystem 2 auch um einen Servercomputer oder um einen sonstigen Computer wie etwa einen Laptop handeln. In der Darstellung gemäß Figur 1 weist das Computersystem 2 einen zentralen Prozessor 5, eine Firmwarekomponente 6 und ein Massenspeichergerät 7 auf. Bei der Firmwarekomponente 6 handelt es sich beispielsweise um ein konventionelles BIOS oder ein sogenanntes BIOS gemäß dem extensible Firmware Interface (EFI). Bei dem Massenspeichergerät 7 kann es sich beispielsweise um eine eingebaute Festplatte, eine sogenannte Solid State Disc (SSD) oder ein anderes Massenspeichergerät handeln. Im Ausführungsbeispiel ist auf dem Massenspeichergerät 7 ein Betriebssystem 8 zum Betrieb des Computersystems 2 gespeichert. Des Weiteren weist das Computersystem 2 im dargestellten Ausführungsbeispiel zwei Anschlüsse 9a und 9b zum Anschluss von peripheren Komponenten auf. Beispielsweise kann es sich dabei um interne oder externe USB-Anschlüsse handeln.

Das System gemäß Figur 1 umfasst schließlich eine externe Tastatur 10, die über den ersten USB-Anschluss 9a mit dem Computersystem 2 verbunden ist. Im beschriebenen Ausführungsbeispiel dient die Tastatur 10 insbesondere zur Eingabe von PINs und anderen Passworten. Im dargestellten Ausführungsbeispiel handelt es sich bei der Tastatur 10 um die üblicherweise zur Eingabe von Informationen verwendete Standardtastatur des Computersystems 2.

Selbstverständlich kann das Computersystem 2 in abweichenden Ausgestaltungen andere oder weitere Komponenten umfassen. Typischerweise weist das Computersystem 2 insbesondere ein oder mehrere Erweiterungskomponenten insbesondere zur Ausgabe von Informationen und zum Zugriff auf ein Datenverarbeitungsnetzwerk auf. Derartige Komponenten sind für die weitere Erläuterung der vorliegenden Erfindung jedoch nicht erforderlich und daher aus Gründen der Übersichtlichkeit in der Figur 1 nicht dargestellt.

Die Leseeinrichtung 3 ist im in Figur 1 dargestellten Ausführungsbeispiel als externes Chipkartenlesegerät ausgestaltet und über ein Anschlusskabel 11 mit dem zweiten Anschluss 9b des Computersystems 2 verbunden. In einer alternativen Ausgestaltung ist die Leseeinrichtung 3 in Form eines internen Chipkartenlesers ausgestaltet, der fest in dem Computersystem 2 integriert und mit weiteren Komponenten des Computersystems 2 über eine interne Schnittstelle verbunden ist. Die Leseeinrichtung 3 umfasst im dargestellten Ausführungsbeispiel einen USB-Anschluss 12 und einen Mikrocontroller 13. Der Mikrocontroller 13 dient zum Austausch von Daten zwischen dem Computersystem 2 und einer Chipkartenschnittstelle 14. Darüber hinaus kann die Leseeinrichtung 3 optional eine eingebaute Tastatur 15 enthalten. Eine eingebaute Tastatur 15 eignet sich insbesondere zur sicheren Eingabe von PIN-Nummern oder anderen Passworten.

Bei der in die Leseeinrichtung 3 eingesetzten Chipkarte 4 handelt es sich insbesondere um eine so genannte Smartcard zur Authentifizierung eines Benutzers. Die Chipkarte 4 umfasst im Ausführungsbeispiel einen sogenannten Kryptocontroller 16 sowie einen nicht-flüchtigen Speicher 17. Auf dem nicht-flüchtigen Speicher 17 befindet sich ein Dateisystem 18 in dem gemäß der Darstellung nach Figur 1 drei Informationsobjekte 19 bis 21 abgelegt sind. Selbstverständlich können in dem nicht-flüchtigen Speicher 17 und insbesondere in dem Dateisystem 18 weitere Informationen, beispielsweise Firmwarekomponenten und Einstellungen für den Kryptokontroller 16 oder für andere Chipkartenanwendungen gespeichert sein. Diese sind aus Gründen der Übersichtlichkeit in der Figur 1 jedoch nicht dargestellt.

Der Kryptocontroller 16 ist ein spezieller Mikrocontroller der den Zugriff auf Daten des nicht-flüchtigen Speichers 17 über die Chipkartenschnittstelle 14 überwacht und gegebenenfalls unterbindet. Darüber hinaus kann der Kryptocontroller 16 optional weitere für eine Chipkarte typische Operationen, insbesondere die Durchführung von Ver- und Entschlüsselungsverfahren sowie Authentifizierung und Autorisierung anhand von in dem Datensystem 18 gespeicherten Schlüsselinformationen durchführen.

Die in dem nicht-flüchtigen Speicher 17 der Chipkarte 4 gespeicherten Informationsobjekte 19 bis 21 dienen unterschiedlichen Aufgaben und Funktionen. Im Ausführungsbeispiel dient das erste Informationsobjekt 19 insbesondere zum Speichern eines sogenannten Elementary Files (EF) wie diese in dem Standard "PKCS #15 v1.1: Cryptographic Token Information Syntax Standard", der RSA-Laboratories, vom 6. Juni 2000 beschrieben ist. Ein Elementary File umfasst Dateneinheiten oder Einträge die einen gemeinsamen Dateinamen, auch bezeichnet als File-Identifier, teilen. In dem Elementary File (EF) des ersten Informationsobjektes 19 sind insbesondere Verweise auf andere Dateien des Dateisystems 18 abgelegt. Darunter befindet sich in der beschriebenen Ausgestaltung auch ein für das elektronische Zugangsschutzsystem 1 spezifischer Verweis auf das zweite Informationsobjekt 20.

In dem zweiten Informationsobjekt 20, bei dem es sich beispielsweise um ein anwendungsspezifisches Verzeichnis mit weiteren Informationsdateien sowie in dem Verzeichnis enthaltenen weiteren Daten handelt, sind Informationen gespeichert, die eine für die Chipkarte 4 spezifische Zugriffsprozedur betreffen. Insbesondere kann in dem Informationsblock 20 eine Vorlage (englisch: Template) für eine Authentifizierungsprozedur der Chipkarte 4 gespeichert sein, mit der sich ein Nutzer gegenüber dem Computersystem 2 als berechtigten Nutzer authentifizieren kann.

In dem dritten Informationsobjekt 21 sind weitere Daten der Chipkarte 4 für die Verwendung mit anderen Anwendungen oder zur Implementierung anderer Funktionen enthalten. Beispielsweise kann in dem dritten Informationsobjekt 21 ein geheimer Schlüssel zum Entschlüsseln von Teilen oder dem gesamten Inhalt des Massenspeichergeräts 7 enthalten sein.

Im beschriebnen Ausführungsbeispiel wird auf den oben genannten Standard zur Implementierung des Zugangsschutzsystems 1 aufgebaut, da er eine gewisse Flexibilität zur Speicherung von kryptografischen Objekten wie asymmetrischen Schlüsseln und Zertifikaten bietet. Somit bietet er die Möglichkeit, anwendungsspezifische Informationen in einer weitgehend standardisierten Struktur des Dateisystems 18 abzulegen.

Praktisch ist eine Vielzahl von am Markt befindlichen Chipkartensystemen kompatibel zu dem oben genannten Standard. Somit kann das beschriebene Zugangsschutzsystem 1 besonders kostengünstig in bestehende Chipkartensysteme integriert werden. Hierzu ist es lediglich erforderlich, das anwendungsspezifische zweite Informationsobjekt 20 auf vorhandenen Chipkarten 4 abzulegen und einen entsprechenden Verweis in das ohnehin vorhandene erste Informationsobjekt 19 aufzunehmen. Des Weiteren muss die Firmwarekomponente 6 einmalig dazu eingerichtet werden, die gespeicherten Informationen aus der Chipkarte 4 abzurufen und auszuwerten. Eine erneute Anpassung der Firmwarekomponente 6 beim Einsatz neuer oder anderer Chipkarten 4 oder Zugriffsprozeduren entfällt jedoch. Somit kann insbesondere eine einheitliche Firmwarekomponente 6 auf Computersystemen zum Einsatz mit unterschiedlichen Chipkartensystemen verwendet werden.

Zur Integration des beschriebenen Zugangsschutzsystem 1 in bestehende Chipkartensysteme können einem Administrator des Chipkartensystems vom Hersteller eines Computersystems 2 die erforderlichen Programme und Daten zum Schreiben des zweiten Informationsobjekts 20 und Anpassen des ersten Informationsobjekts 19 zur Verfügung gestellt werden. Der Administrator kann dann bestehende Chipkarten 4 der von ihm Betreuten Benutzer durch Aufspielen der zusätzlichen Daten kompatibel mit der Firmwarekomponente 6 von neuen oder bereits eingesetzten Computersystemen 2 machen.

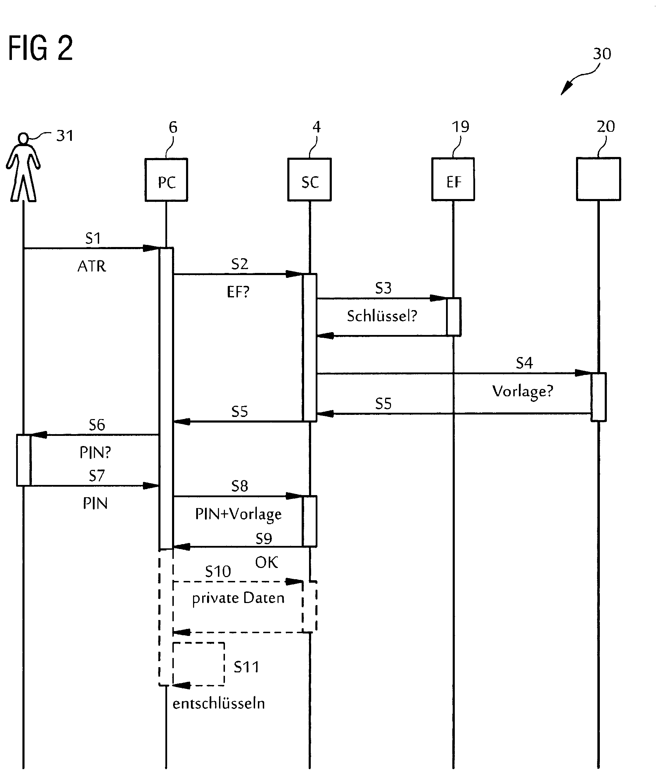

Nachfolgend wird unter Bezugnahme auf das Kollaborationsdiagramm gemäß Figur 2 die Funktionsweise eines Zugangsschutzverfahrens 30 näher erläutert. Das Verfahren 30 kann beispielsweise unter Verwendung des elektronischen Zugangsschutzsystems 1 gemäß Figur 1 ausgeführt werden.

In einem ersten Schritt S1 schaltet ein Benutzer 31 das Computersystem 2 ein, beispielsweise durch Betätigen einer entsprechenden Einschalttaste. Zur Authentifizierung führt er eine für den Benutzer ausgestellte Chipkarte 4 in Form einer Smartcard (SC) in die Leseeinrichtung 3 des Computersystems 2 ein. Das Einführen der Chipkarte 4 kann vor oder nach dem Einschalten des Computersystems 2 erfolgen.

Nach dem Einführen der Chipkarte 4 und dem Einschalten des Computersystems 2 übermittelt der Kryptocontroller 16 der Chipkarte 4 ein sogenanntes Answer-to-Reset (ATR) Signal an den Mikrocontroller 14 der Leseeinrichtung 3, der das ATR-Signal über den USB-Anschluss 12, das Anschlusskabel 11 und den zweiten USB-Anschluss 9b an das Computersystem 2 weiterleitet. Zugleich führt das Computersystem 2 zu diesem Zeitpunkt in der Firmwarekomponente 6 gespeicherten Programmcode zum Initialisieren des Computersystems 2 aus. Insbesondere führt das Computersystem BIOS-Funktionen zum Erkennen und Testen von in dem Computersystem 2 vorhandenen Hardware-Komponenten aus. In dieser so genannten Preboot Execution Environment (PXE) können auch weitere Komponenten der Firmwarekomponente 6 ausgeführt werden. Insbesondere umfasst die Firmwarekomponente 6 im Ausführungsbeispiel Programmcode zur Kommunikation mit der Leseeinrichtung 3. Dieser Programmcode erhält das ATR-Signal der Chipkarte 4 und erkennt daraufhin, dass eine Chipkarte 4 in die Leseeinrichtung 3 eingesetzt wurde und gegebenenfalls ein zur Datenübertragung verwendetes Protokoll.

In einem nachfolgenden Schritt S2, versucht die Firmwarekomponente 6 auf ein gemäß dem oben genannten PKCS #15-Standard vorgesehenen erstes Informationsobjekt 19 in Form eines Elementary Files (EF) zuzugreifen. Der Speicherort und Dateiname des ersten Informationsobjektes 19 ist in dem oben genannten Standard geregelt, so dass zum Zugriff auf das erste Informationsobjekt 19 keine weiteren Informationen auf Seiten der Firmwarekomponente 6 erforderlich sind. Wird das erste Informationsobjekt 19 gefunden, erkennt die Firmwarekomponente 6, dass es sich um eine PKCS #15-kompatible Chipkarte 4 handelt. Ist dies nicht der Fall endet das Verfahren 30 erfolglos und der Benutzer wird beispielsweise aufgefordert, eine andere Chipkarte 4 in die Leseeinrichtung 3 einzusetzen.

Wurde das erste Informationsobjekt 19 gefunden, wird nachfolgend nach Informationen in dem im ersten Informationsobjekt 19 gesucht, die auf das zweite Informationsobjekt 20 verweisen. Im beschriebenen Ausführungsbeispiel handelt es sich dabei um ein weiteres Elementary File (EF) in einem anwendungsspezifischen Verzeichnis des Dateisystems 18. Ein Schlüsseleintrag zur Identifizierung des zweiten Informationsobjekts 20 kann beispielsweise spezifisch für das elektronische Zugangsschutzsystem 1 vorgegeben sein. Wird ein entsprechender Eintrag nicht gefunden, wird das Verfahren 30 wie oben beschrieben abgebrochen und der Benutzer gegebenenfalls aufgefordert eine zugelassene Chipkarte 4 einzusetzen.

Wird ein entsprechender Eintrag gefunden, werden in einem nachfolgenden Schritt S4 die in dem zweiten Informationsblock 20 gespeicherten Informationen geöffnet. Beispielsweise kann ein oder mehrere kryptografische Objekte geöffnet werden, die in dem anwendungsspezifischen Verzeichnis des Dateisystems 18 enthalten und in dem Elementary File (EF) des zweiten Informationsobjekts 20 eingetragen sind. Die darin enthaltenen Daten umfassen beispielsweise eine Vorlage zur Durchführung eines für die eingelegte Chipkarte 4 spezifische Zugriffsprozedur zur Überprüfung der Authentifizierung des Benutzers 31. Zur Implementierung der kartenspezifischen Zugriffsprozedur wird das ermittelte zweite Informationsobjekt 20 im Schritt S5 ganz oder teilweise an die Firmwarekomponente 6 des Computersystems 2 übertragen.

Ein beispielhafter Inhalt des zweiten Informationsobjektes 20 wird nachfolgend anhand von APDU-Befehlen gemäß dem ISO/IEC 7816 Standard näher beschrieben. Grundsätzlich setzen sich APDU-Befehle gemäß dem genannten Standard aus einem Nachrichtenkopf und dem Nachrichteninhalt wie folgt zusammen:

| Kopf (engl.: Header) | Inhalt (engl.: Body) |
|---|---|
| [CLA INS P1 P2] | [Lc] [Data] [Le] |

Dabei stehen die Platzhalter CLA für "Class Byte", INS für "Instruction Byte", P1 für "Paramter Byte 1", P2 für "Parameter Byte 2", Lc für "Length of data" also die Länge der nachfolgenden Daten (Data) und Le für "Length of Answer", also die Länge der erwarteten Antwort.

Am Beispiel des Befehls VERIFY werden nachfolgend unterschiedliche mögliche Interpretationen der APDU-Befehle aufgezeigt. Zu beachten sind hier die diversen Formatierungen der PIN. Das Byte Le wird bei der PIN nicht benötigt.

Beispiele für einen VERIFY-Befehl mit unterschiedlicher Formatierung der PIN sind etwa:
[00 20 00 01] [08] [31 32 33 34 35 36 37 38]
   PIN = "12345678" ASCII codiert
[00 20 00 01] [08] [01 02 03 04 05 06 07 08]
   PIN = "12345678" binär codiert
[00 20 00 01] [08] [01 02 03 04 05 06 07 10]
   PIN = "12345678" oktal codiert
[00 20 00 73] [04] [31 32 33 34]
   PIN = "1234" ASCII codiert
[00 20 00 02] [08] [31 32 33 34 FF FF FF FF]
   PIN = "1234" ASCII codiert mit Fixer Länge von acht Zeichen, die nicht benutzten Zeichen werden mit dem als Padding Byte verwendeten Zeichen $FF aufgefüllt.

Ein mögliches Muster einer APDU-Befehlsvorlagendatei wird im Folgenden beschrieben. Die Vorlagendatei kann beispielsweise ein lineares, binäres Elementary File (EF) sein, die im so genannten TLV-Verfahren (Type Length Value) organisiert ist. Als anwendungsspezifischer Typ sind zwischen der Firmwarekomponente 6 und dem Zugangsschutzsystem hexadezimale Bytes im Bereich ab $A0 vereinbart. Die Befehle werden hier mit dem folgenden Typ Bytes abgebildet:
$B0 Template Block
   $A0 VERIFY
   $A1 READ BINARY
   $A1 READ RECORD
...
$B1 Relativer Pfad vom Ausgangsverzeichnis zum Elementary File (EF) mit den relevanten Nutzdaten.

Folgende Subtypen sollen für die Beschreibung des VERIFY-Befehls gelten:
$81 APDU Header
$82 PIN Limits Minimum Length | Maximum Length
$83 PIN Codierungsformat:
   $01 binär
   $08 oktal
   $11 binär codierte Dezimalzahl (BCD)
   $0A ASCII
   $21 Binärzahl in Nibbles (Halbbyte bzw. 4-Bit-Codierung)
$84 PIN Padding Byte

Für die anderen genannten Befehle READ BINARY und READ RECORD werden lediglich die Subtags $81 - APDU Header - verwendet. Somit ergibt sich für eine ASCII codierte PIN mit einer Länge zwischen 84 Zellenstellen folgendes Muster für den VERIFY-Befehl:
A0 0D 81 04 00 20 00 01 82 02 04 08 83 01 0A

Für eine binär codierte PIN mit einer Länge zwischen sechs und zehn Stellen ergibt sich dagegen folgendes Muster:
A0 0D 81 04 00 20 00 02 82 02 06 0A 83 01 01

Für eine ASCII codierte PIN mit einer festen Länge von acht Stellen und einem Padding Byte $FF ergibt sich folgendes Muster:
A0 10 81 04 00 20 00 01 82 01 08 83 01 0A 84 01 FF

Im Ergebnis kann eine Vorlagendatei in Form eines Elementary Files (EF) für die genannten drei APDU-Befehle somit wie folgt aufgebaut sein:
B0 2A (Template Block mit Länge 42 Byte)
   A0 10 (Beschreibung VERIFY mit Länge 16 Byte)
      81 04 (Header mit 4 Byte)
         00 20 00 01
      82 01 (PIN Länge)
         08 (feste Länge 8 Byte)
      83 01 (Format)
         08 (ASCII codiert)
      84 01 (Padding Byte)
         FF
   A1 06 (Beschreibung READ BINARY mit Länge 6 Byte)
      81 05 (Header 5 Byte)
      00 W0 00 00 00
   A2 10 (Beschreibung READ RECORD mit Länge 6 Byte)
      81 05 (Header 5 Byte)
      00 D0 00 00 00
B1 04 (Relativer Pfad EF 4 Byte)
   32 00 24 01

Die Firmwarekomponente 6 wertet die von der Chipkarte 4 enthaltenen Informationen aus und fragt daraufhin im Schritt S6 in der Vorlage vorgegebene Daten, wie zum Beispiel eine PIN-Nummer, vom Benutzer 31 ab. Der Benutzer 31 kann die angefragte PIN-Nummer beispielsweise über die an das Computersystem 2 angeschlossene externe Tastatur 10 eingeben und übermittelt diese im Schritt S7 zurück an die Firmwarekomponente 6 des Computersystems 2. Anstelle der im Beispiel beschriebenen PIN-Abfrage können auch andere Benutzerdaten zur Authentifizierung abgefragt werden. Beispielsweise können auch ein Fingerabdruck oder andere biometrische Daten des Benutzers 31 über das Computersystem 2 abgefragt und zur Authentifizierung an die Chipkarte 4 übertragen werden.

Auf Grundlage der in dem zweiten Informationsobjekt 20 enthaltenen Vorlage und der im Schritt S7 übermittelten Daten des Benutzers 31 erstellt die Firmwarekomponente 6 im Schritt S8 eine für die Chipkarte 4 spezifische Anfrage, beispielsweise zur Authentifizierung des Benutzers 31 mittels des VERIFY-Befehls. Diese wird nachfolgend an den Kryptocontroller 16 der Chipkarte 4 übertragen und von ihm verarbeitet. Ist beispielsweise eine Überprüfung einer PIN nicht erfolgreich, wird das negative Ergebnis zurück an die Firmwarekomponente 6 übermittelt, die den Benutzer 31 gegebenenfalls erneut zur Eingabe der korrekten PIN oder sonstigen Zugangsdaten auffordert. Das Verfahren 30 wird dann erneut ab dem Schritt S6 fortgesetzt. Insbesondere bei mehrmaliger Eingabe von falschen Zugangsdaten kann der Kryptocontroller 16 die in dem nicht-flüchtigen Speicher 17 gespeicherten Daten jedoch auch dauerhaft sperren oder endgültig löschen, um einen Manipulationsversuch zu unterbinden. In jedem Fall verhindert die Firmwarekomponente 6 in diesem Fall das weitere Hochfahren des Computersystems 2.

Führt die im Schritt S8 übermittelten Anfrage jedoch zu einer erfolgreichen Authentifizierung des Benutzers 31 auf Grundlage der von ihm eingegebenen Zugangsdaten zur Benutzung des Computersystems 2, sendet der Kryptocontroller 16 im Schritt S9 ein Freigabesignal an die Firmwarekomponente 6. Daraufhin fährt die Firmwarekomponente beispielsweise mit einem Bootvorgang des Computersystems 2 fort.

Optional liest die Firmwarekomponente 6 in einem nachfolgenden Schritt S10 weitere benutzerspezifische Daten und/oder Vorlagen von der Chipkarte 4 ein. Dabei können auch weitere chipkartenspezifische Zugriffsprozeduren, wie etwa zum Einsatz auf der Chipkarte 4 gespeicherter geheimer Schlüssel Verwendung finden.

Beispielsweise kann ein drittes Informationsobjekt 21 mit einem geheimen Schlüssel des Benutzers 31 mit Hilfe eines chipkartenspezifischen Befehls eingelesen und in einem Schritt S11 zur Entschlüsselung von Daten des Massenspeichergeräts 7 eingesetzt werden. Nach einer Entschlüsselung des Massenspeichergeräts 7 wird das Startverfahren des Computersystems 2 dann durch die Firmwarekomponente 6 fortgesetzt. Insbesondere kann sie die Kontrolle an ein von dem Massenspeichergerät 7 geladenes Betriebssystem 8 übergeben.

Optional kann das Betriebssystem 8 oder darauf aufsetzende Anwendungsprogramme über eine Schnittstelle der Firmwarekomponente 6 ebenfalls auf die Chipkarte 6 zugreifen und eine oder mehrere chipkartenspezifische Zugriffsprozeduren zur Authentifizierung des Benutzers 31 bei sicherheitsrelevanter Benutzeraktionen oder zum Ausführen anderer chipkartenspezifischer Funktionen verwenden.

Obwohl das Verfahren 30 anhand des Starts eines Zugangsschutzes für ein Computersystems 2 im Detail beschrieben wurde, eignet sich das beschriebene Zugangsschutzsystem 1 und das beschriebene Verfahren 30 auch für andere Einsatzgebiete, Vorrichtungen und Betriebsphasen unterschiedlicher Geräte. Beispielsweise kann das Verfahren 30 auch zur Verwendung und Überprüfung von geheimen und öffentlichen Schlüsseln und Signaturen im Betrieb eines Computersystems 2 benutzt werden. Des Weiteren eignet sich das elektronische Zugangsschutzsystem 1 auch für eine automatische Zugangskontrolle zu anderen Vor- oder Einrichtungen auf Grundlage von Chipkarten 4.

### Bezugszeichenliste

- 1: elektronisches Zugangsschutzsystem
- 2: Computersystem
- 3: Leseeinrichtung
- 4: Chipkarte
- 5: Prozessor
- 6: Firmwarekomponente
- 7: Massenspeichergerät
- 8: Betriebssystem
- 9a: erster Anschluss
- 9b: zweiter Anschluss
- 10: Tastatur
- 11: Anschlusskabel
- 12: USB-Anschluss
- 13: Mikrocontroller
- 14: Chipkartenschnittstelle
- 15: Tastatur
- 16: Kryptocontroller
- 17: nicht-flüchtiger Speicher
- 18: Dateisystem
- 19: erstes Informationsobjekt
- 20: zweites Informationsobjekt
- 21: drittes Informationsobjekt

- 30: Verfahren
- 31: Benutzer

## Patentansprüche

1. Elektronisches Zugangsschutzsystem (1) für ein Computersystem (2) oder dergleichen, umfassend:
- eine zugangsgeschützte Vorrichtung mit einer Firmwarekomponente (6) und einer Datenverarbeitungseinrichtung zum Ausführen von Programmcode der Firmwarekomponente (6);
- eine mit der Vorrichtung gekoppelte Leseeinrichtung (3) zum Lesen von Chipkarten (4); und
- wenigstens eine Chipkarte (4) mit wenigstens einer chipkartenspezifischen Zugriffsprozedur;
wobei
- in einem vorbestimmten Speicherbereich der wenigstens einen Chipkarte (4) erste Informationen bezüglich der wenigstens einen chipkartenspezifischen Zugriffsprozedur abgelegt sind, wobei die ersten Informationen einen Verweis auf in einem anderen Speicherbereich der wenigstens einen Chipkarte (4) gespeicherte zweite Informationen enthalten, wobei die zweiten Informationen Daten zur Durchführung der wenigstens einen chipkartenspezifischen Zugriffsprozedur enthalten; und
- die wenigstens eine Firmwarekomponente (6) ausführbarem Programmcode zum Einlesen und Auswerten von Daten der wenigstens einen Chipkarte (4) aufweist und dazu eingerichtet ist, die wenigstens eine chipkartenspezifische Zugriffsprozedur für die wenigstens eine Chipkarte (4) auf Grundlage der in dem ersten Speicherbereich gespeicherten ersten Informationen und der in dem anderen Speicherbereich gespeicherten zweiten Informationen durchzuführen.

2. Elektronisches Zugangsschutzsystem (1) nach Anspruch 1, bei dem die ersten Informationen in einem vorbestimmten standardkonformen Objekt in der Chipkarte (4) abgelegt sind, insbesondere in einem vorbestimmten ersten Informationsobjekt (19) eines vorbestimmten Systemverzeichnisses.

3. Elektronisches Zugangsschutzsystem (1) nach Anspruch 1 oder 2, bei dem die zweiten Informationen in einem für das elektronische Zugangsschutzsystem (1) spezifischen zweiten Informationsobjekt (20) der Chipkarte (4) abgelegt sind, insbesondere in einem kryptographischen Objekt (20) eines Anwendungsverzeichnisses.

4. Elektronisches Zugangsschutzsystem (1) nach einem der Ansprüche 1 bis 3, bei dem die zweiten Informationen Vorlagen und/oder Parameter für Befehle zur Durchführung der wenigstens einen chipkartenspezifischen Zugriffsprozedur enthalten.

5. Verfahren (30) zum Betrieb eines Computersystems (2) oder dergleichen mit einer Firmwarekomponente (6) und einer elektronischen Leseeinrichtung (3) zum Lesen von Chipkarten (4), umfassend:
- Erkennen einer in die Leseeinrichtung (3) eingeführten Chipkarte (4) durch die Firmwarekomponente (6);
- Auslesen und Auswerten von in einem vorbestimmten Speicherbereich der wenigstens einen Chipkarte (4) gespeicherten ersten Informationen bezüglich wenigstens einer chipkartenspezifischen Zugriffsprozedur, wobei die ersten Informationen einen Verweis auf in einem anderen Speicherbereich der wenigstens einen Chipkarte (4) gespeicherte zweite Informationen enthalten, wobei die zweiten Informationen Daten zur Durchführung der wenigstens einen chipkartenspezifischen Zugriffsprozedur enthalten; und
- Durchführen der wenigstens einen chipkartenspezifischen Zugriffsprozedur auf Grundlage der ausgewerteten ersten und zweiten Informationen durch die Firmwarekomponente (6) .

6. Verfahren (30) nach Anspruch 5, zusätzlich umfassend:
- Gestatten eines Zugangs auf eine zugangsgeschützte Vorrichtung durch die Firmwarekomponente (6), wenn die chipkartenspezifische Zugriffsprozedur erfolgreich durchgeführt wurde, und, andernfalls, Verweigern eines Zugangs auf die zugangsgeschützte Vorrichtung durch die Firmwarekomponente (6).

7. Verfahren (30) nach Anspruch 5 oder 6, bei dem die Schritte des Erkennens, Auslesens, Auswertens und Durchführens unter Kontrolle eines BIOS vor dem Laden eines Betriebssystems (8) eines Computersystems (2) durchgeführt werden.

8. Verfahren (30) nach einem der Ansprüche 5 bis 7, bei dem die ersten Informationen aus einem vorbestimmten standardkonformen Objekt, insbesondere einem vorbestimmten Informationsobjekt (19) eines vorbestimmten Verzeichnisses, der Chipkarte (4) ausgelesen werden.

9. Verfahren (30) nach Anspruch 8, bei dem eine Datenverarbeitungsvorrichtung der Chipkarte (4) dazu eingerichtet ist, die ersten Informationen auszulesen und auszuwerten und basierend auf den ausgewerteten ersten Informationen die zweiten Informationen auszulesen und an die Firmwarekomponente (6) zu übermitteln.

10. Verfahren (30) nach Anspruch 8, bei dem die Firmwarekomponente (6) dazu eingerichtet ist, die ersten Informationen von der Chipkarte (4) anzufordern und auszuwerten und basierend auf den ausgewerteten ersten Informationen die zweiten Informationen von der Chipkarte (4) anzufordern und auszuwerten.

11. Chipkarte (4), zur Verwendung in dem elektronischen Zugangsschutzsystem (1) gemäß einem der Ansprüche 1 bis 4 und/oder in dem Verfahren (30) nach einem der Ansprüche 5 bis 10, umfassend:
- wenigstens eine Datenverarbeitungsvorrichtung, insbesondere einen Kryptocontroller (16), und
- wenigstens einen nicht-flüchtigen Speicher (17), wobei in einem vorbestimmten Speicherbereich des nicht-flüchtigen Speichers (17) erste Informationen bezüglich wenigstens einer chipkartenspezifischen Zugriffsprozedur abgelegt sind, wobei die ersten Informationen einen Verweis auf in einem anderen Speicherbereich der wenigstens einen Chipkarte (4) gespeicherte zweite Informationen enthalten, wobei die zweiten Informationen Daten zur Durchführung der wenigstens einen chipkartenspezifischen Zugriffsprozedur enthalten.

12. Firmwarekomponente (6) umfassend Programmcode für ein elektronisches Zugangsschutzsystem (1) mit wenigstens einer Datenverarbeitungsvorrichtung, wobei die Firmwarekomponente (6) dazu eingerichtet ist, beim Ausführen des Programmcodes durch die wenigstens eine Datenverarbeitungsvorrichtung ein Verfahren (30) gemäß einem der Ansprüche 5 bis 10 durchzuführen.

## Claims

1. Electronic access protection system (1) for a computer system (2) or the like, comprising:
- an access-protected apparatus having a firmware component (6) and a data processing device for executing program code of the firmware component (6);
- a reading device (3) coupled to the apparatus for reading chip cards (4); and
- at least one chip card (4) having at least one chip-card-specific access procedure;
wherein
- a predetermined memory area of the at least one chip card (4) stores first information concerning the at least one chip-card-specific access procedure, wherein the first information contains a reference to second information stored in another memory area of the at least one chip card (4), wherein the second information contains data to perform the at least one chip-card-specific access procedure; and
- the at least one firmware component (6) comprises executable program code for reading in and evaluating data of the at least one chip card (4) and is configured to perform the at least one chip-card-specific access procedure for the at least one chip card (4) on the basis of the first information stored in the first memory area and the second information stored in the other memory area.

2. Electronic access protection system (1) according to claim 1, in which the first information is stored in a predetermined standard-compliant object in the chip card (4), in particular in a predetermined first information object (19) of a predetermined system directory.

3. Electronic access protection system (1) according to claim 1 or 2, in which the second information is stored in a second information object, specific to the electronic access protection system (1), of the chip card (4), in particular in a cryptographic object (20) of an application directory.

4. Electronic access protection system (1) according to any one of claims 1 to 3, in which the second information contains templates and/or parameters for commands to perform the at least one chip-card-specific access procedure.

5. Method (30) of operating a computer system (2) or the like having a firmware component (6) and an electronic reading device (3) for reading chip cards (4), comprising:
- recognizing, by the firmware component (6), a chip card (4) introduced into the reading device (3);
- reading and evaluating first information, stored in a predetermined memory area of the at least one chip card (4), concerning at least one chip-card-specific access procedure, wherein the first information contains a reference to second information stored in another memory area of the at least one chip card (4), wherein the second information contains data to perform the at least one chip-card-specific access procedure; and
- performing the at least one chip-card-specific access procedure on the basis of the evaluated first and second information by the firmware component (6).

6. Method (30) according to claim 5, further comprising:
- granting access to an access-protected apparatus by the firmware component (6) if the chip-card-specific access procedure has been performed successfully and, otherwise, denying access to the access-protected apparatus by the firmware component (6).

7. Method (30) according to claim 5 or 6, in which the steps of recognizing, reading, evaluating and performing are performed under control of a BIOS before an operating system (8) of a computer system (2) is loaded.

8. Method (30) according to one of claims 5 to 7, in which the first information is read from a predetermined standard-compliant object, in particular a predetermined information object (19) of a predetermined directory, of the chip card (4).

9. Method (30) according to claim 8, in which a data processing apparatus of the chip card (4) is configured to read and evaluate the first information, and, on the basis of the evaluated first information, to read the second information and transmit it to the firmware component (6).

10. Method (30) according to claim 8, in which the firmware component (6) is configured to request and evaluate the first information from the chip card (4) and, on the basis of the evaluated first information, to request and evaluate the second information from the chip card (4).

11. Chip card (4) for use in the electronic access protection system (1) according to any one of claims 1 to 4, and/or in the method (30) according to any one of claims 5 to 10, comprising:
- at least one data processing apparatus, in particular a crypto-controller (16), and
- at least one nonvolatile memory (17), wherein a predetermined memory area of the nonvolatile memory (17) stores first information concerning at least one chip-card-specific access procedure, wherein the first information contains a reference to second information stored in another memory area of the at least one chip card (4), wherein the second information contains data to perform the at least one chip-card-specific access procedure.

12. Firmware component (6) comprising program code for an electronic access protection system (1) having at least one data processing apparatus, wherein the firmware component (6) is configured to perform a method (30) according to any one of claims 5 to 10, when the program code is executed by the at least one data processing apparatus.

## Revendications

1. Système de protection d'accès (1) électronique pour un système informatique (2) ou similaire, comprenant :
- un dispositif à accès protégé avec un composant à microprogramme (6) et un système de traitement de données pour exécuter un code programme du composant à microprogramme (6) ;
- un système de lecture (3) couplé au dispositif, servant à lire des cartes à puce (4) ; et
- au moins une carte à puce (4) avec au moins une procédure d'accès spécifique à la carte à puce,
dans lequel
- des premières informations concernant l'au moins une procédure d'accès spécifique à la carte à puce sont déposées dans une zone de mémoire prédéfinie de l'au moins une carte à puce (4), dans lequel les premières informations contiennent un renvoi à des deuxièmes informations mémorisées dans une autre zone de mémoire de l'au moins une carte à puce (4), dans lequel les deuxièmes informations contiennent des données pour réaliser l'au moins une procédure d'accès spécifique à la carte à puce ; et
- l'au moins un composant à microprogramme (6) présente un code programme pouvant être exécuté pour lire et pour évaluer des données de l'au moins une carte à puce (4) et est configuré pour réaliser l'au moins une procédure d'accès spécifique à la carte à puce pour l'au moins une carte à puce (4) sur la base des premières informations mémorisées dans la première zone de mémoire et des deuxièmes informations mémorisées dans l'autre zone de mémoire.

2. Système de protection d'accès (1) électronique selon la revendication 1, où les premières informations sont stockées dans un objet prédéfini conforme aux normes dans la carte à puce (4), en particulier dans un premier objet d'informations (19) prédéfini d'un répertoire de système prédéfini.

3. Système de protection d'accès (1) électronique selon la revendication 1 ou 2, où les deuxièmes informations sont stockées dans un deuxième objet (20) d'information de la carte à puce (4) spécifique au système de protection d'accès (1) électronique, en particulier dans un objet (20) cryptographique d'un répertoire d'application.

4. Système de protection d'accès (1) électronique selon l'une quelconque des revendications 1 à 3, où les deuxièmes informations contiennent des modèles et/ou paramètres pour des instructions pour réaliser l'au moins une procédure d'accès spécifique à la carte à puce.

5. Procédé (30) servant à faire fonctionner un système informatique (2) ou similaire avec un composant à microprogramme (6) et un système de lecture (3) électronique servant à lire des cartes à puce (4), comprenant :
- l'identification d'une carte à puce (4) introduite dans le système de lecture (3) par le composant à microprogramme (6) ;
- la lecture et l'évaluation de premières informations mémorisées dans une zone de mémoire prédéfinie de l'au moins une carte à puce (4), concernant au moins une procédure d'accès spécifique à la carte à puce, dans lequel les premières informations contiennent un renvoi à des deuxièmes informations mémorisées dans une autre zone de mémoire de l'au moins une carte à puce (4), dans lequel les deuxièmes informations contiennent des données servant à mettre en oeuvre l'au moins une procédure d'accès spécifique à la carte à puce ; et
- réaliser l'au moins une procédure d'accès spécifique à la carte à puce sur la base des premières et deuxièmes informations évaluées par le composant à microprogramme (6) .

6. Procédé (30) selon la revendication 5, comprenant en supplément :
- l'autorisation d'un accès à un dispositif à accès protégé par le composant à microprogramme (6) quand la procédure d'accès spécifique à la carte à puce a été réalisée avec succès, et, dans le cas contraire, le refuse d'un accès au dispositif à accès protégé par le composant à microprogramme (6).

7. Procédé (30) selon la revendication 5 ou 6, où les étapes de l'identification, de la lecture, de l'évaluation et de la réalisation sont réalisées sous le contrôle d'un BIOS avant le chargement d'un système d'exploitation (8) d'un système informatique (2).

8. Procédé (30) selon l'une quelconque des revendications 5 à 7, où les premières informations sont lues depuis un objet prédéfini conforme aux normes, en particulier un objet d'information (19) prédéfini d'un répertoire prédéfini, de la carte à puce (4).

9. Procédé (30) selon la revendication 8, où un dispositif de traitement de données de la carte à puce (4) est configuré pour lire et évaluer les premières informations et, sur la base des premières informations évaluées, lire les deuxièmes informations et les transmettre au composant à microgramme (6).

10. Procédé (30) selon la revendication 8, où le composant à microprogramme (6) est configuré pour demander à la carte à puce (4) les premières informations et les évaluer et, sur la base des premières informations évaluées, demander à la carte à puce (4) les deuxièmes informations et les évaluer.

11. Carte à puce (4) destinée à être utilisée dans le système de protection d'accès (1) électronique selon l'une quelconque des revendications 1 à 4 et/ou dans le procédé (30) selon l'une quelconque des revendications 5 à 10, comprenant :
- au moins un dispositif de traitement de données, en particulier un cryptocontrôleur (16), et
- au moins une mémoire non volatile (17), dans laquelle des premières informations concernant au moins une procédure d'accès spécifique à la carte à puce sont stockées dans une zone de mémoire prédéfinie de la mémoire non volatile (17), dans laquelle les premières informations contiennent un renvoi à des deuxièmes informations mémorisées dans une autre zone de mémoire de l'au moins une carte à puce (4), dans laquelle les deuxièmes informations contiennent des données servant à réaliser l'au moins une procédure d'accès spécifique à la carte à puce.

12. Composant à microprogramme (6) comprenant un code programme pour un système de protection d'accès (1) électronique avec au moins un dispositif de traitement de données, dans lequel le composant à microprogramme (6) est configuré pour réaliser, lors de l'exécution du code programme par l'au moins un dispositif de traitement de données, un procédé (30) selon l'une quelconque des revendications 5 à 10.
